# EUROPÄISCHE PATENTSCHRIFT

(11) **EP 1 144 968 B1**
(45) Veröffentlichungstag und Bekanntmachung des Hinweises auf die Patenterteilung: **11.09.2002**
(21) Anmeldenummer: 00904902.4
(22) Anmeldetag: 12.01.2000
(51) Int. Cl.: G01K 7/18

(54) **PLATINTEMPERATURSENSOR UND HERSTELLUNGSVERFAHREN FÜR DENSELBEN**
PLATINUM TEMPERATURE SENSOR AND METHOD FOR PRODUCING SAME
THERMOMETRE A RESISTANCE DE PLATINE ET SON PROCEDE DE PRODUCTION

(30) Priorität: 14.01.1999 DE 19901183
(43) Veröffentlichungstag der Anmeldung: 17.10.2001
(73) Patentinhaber: SENSOTHERM TEMPERATURSENSORIK GmbH, 90441 Nürnberg (DE)
(72) Erfinder: ZITZMANN, Heinrich, D-91207 Lauf an der Pegnitz (DE)
(74) Vertreter: Schoppe, Fritz, Dipl.-Ing.
(86) Internationale Anmeldenummer: EP0000179
(87) Internationale Veröffentlichungsnummer: WO00042403

(56) Entgegenhaltungen:
- EP-A- 0 571 412
- WO-A-87/05146

## Beschreibung

Die vorliegende Erfindung bezieht sich auf einen Platintemperatursensor und ein Herstellungsverfahren für denselben, und insbesondere auf einen Platintemperatursensor, bei dem ein Platindünnfilmwiderstand, der auf ein Keramiksubstrat aufgebracht ist, zur Temperaturerfassung verwendet wird.

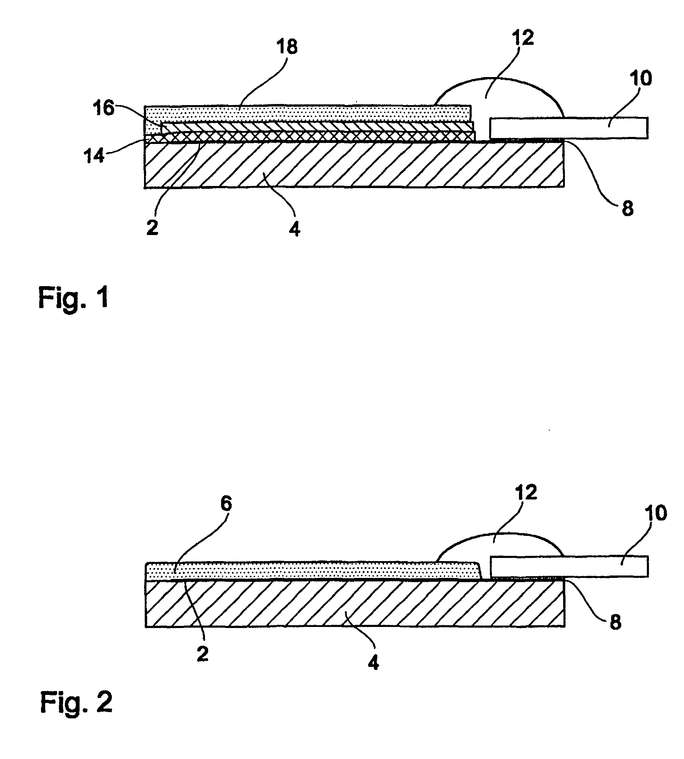

Ein bekannter Platintemperatursensor ist in Fig. 2 dargestellt. Bei diesem bekannten Platintemperatursensor ist ein Platindünnfilmwiderstand 2 auf ein Keramiksubstrat 4, das üblicherweise aus Aluminiumoxid Al₂O₃ besteht, aufgebracht. In dem Bereich, in dem der Platindünnfilmwiderstand 2 gebildet ist, ist auf der Oberfläche des Keramiksubstrats 4 eine Schutzglasur 6 vorgesehen. Die Platinschicht, in der der Platindünnfilmwiderstand 2 üblicherweise meanderförmig gebildet ist, ist ferner strukturiert, um Anschlußflächen 8 aufzuweisen, mit denen Anschlußdrähte 10 zur Entnahme des Sensorsignals elektrisch leitfähig verbunden sind. Zur Fixierung der Anschlußdrähte 10 ist eine Glasur 12 vorgesehen.

Der in Fig. 2 dargestellte Platintemperatursensor in Dünnschichttechnik ist in seinem Anwendungsbereich normalerweise auf 600°C beschränkt. Nach einer Ausführungsform für höhere Einsatztemperaturen, die bei über 1000°C liegen können, besteht jedoch bereits seit einigen Jahren ein steigendes Interesse. Auf dem Gebiet der Hochtemperaturfühler wurden deshalb beträchtliche Anstrengungen unternommen, um Platintemperaturfühler verfügbar zu machen, die für einen Einsatz in derart hohen Temperaturbereichen geeignet sind. Durch gezielte Auswahl der Zusammensetzung der Schutzglasur 6 konnten bereits zufriedenstellende Lösungen für einige Anwendungen gefunden werden, wohingegen in sehr anspruchsvollen Einsatzgebieten, beispielsweise bei speziellen Einsätzen im Kfz-Bereich, die Ergebnisse nicht alle Anforderungen erfüllen. Beispielsweise ist die Langzeitstabilität von Temperaturfühlern der oben beschriebenen Art insbesondere bei Beaufschlagung mit einem gewissen Meßstrom, der beispielsweise bei 5 mA liegen kann, bei den auftretenden hohen Temperaturen im Bereich von 800°C bis 1000°C nicht ausreichend gewährleistet, da die verwendeten Schutzglasuren bei diesen hohen Temperaturen durch den notwendigen Meßstrom elektrochemisch zersetzt werden können. Die dabei auftretende Materialwanderung beeinflußt die Eigenschaften des Platins negativ, so daß dadurch die Stabilität der Fühler und somit die Meßgenauigkeit beeinträchtigt wird.

Durch eine gezielte Auswahl der Zusammensetzung der Schutzglasuren konnten in einem gewissen Umfang Verbesserungen erreicht werden, wobei jedoch keine Schutzglasuren gefunden wurden, die bei Dauerbelastungen in einem Temperaturbereich von 1000°C oder darüber der elektrochemischen Zersetzung durch den Meßstrom widerstehen.

Aus der EP-B-0571412 ist ein schneller Platinmetall-Temperatursensor bekannt, bei dem eine Passivierungsschicht aus einer Keramikschicht und einer Glasschicht besteht. Die Reihenfolge mit der diese Schichten auf den Platinmetall-Temperatursensor aufgebracht sind, ist dabei beliebig. Ist die Keramikschicht direkt auf dem Temperatursensor angeordnet und die Glasschicht darüber, dringt nach der EP-B-0571412 bei hohen Temperaturen die Glasschicht in sich eventuell bildende Risse der Keramikschicht ein. Die Keramikschicht ist in Dickschicht- oder Dünnfilm-Technik aufgebracht.

Aus der DE 195 40 194 C1 ist ein Widerstandsthermometer bekannt, bei dem ein Platinwiderstand auf einem Substrat aus Magnesiumtitanat vorgesehen ist. Zwischen dem Platinwiderstand und einer Schutzglasur ist eine Zwischenschicht angeordnet, die eine Doppelschichtstruktur aufweist, bei der eine Schicht aus Glas und eine Schicht aus Keramik oder beide Schichten aus Keramik bestehen können. Bestehen die Schichten aus Keramik, werden sie jeweils als Keramikplättchen einer Dicke von 0,1 bis 10 mm aufgebracht.

Die DE 43 00 084 C2 beschreibt ein Widerstandsthermometer, bei dem ein Platinmeßwiderstand auf einer isolierenden Schicht, die auf einem Keramiksubstrat angebracht ist, angeordnet ist. Zwischen Platinmeßwiderstand und einer Schutzglasur ist eine Abdeckschicht aus Silikatglas angeordnet.

Die WO-A-8705146 offenbart einen Platintemperatursensor mit einem Keramiksubstrat, einem auf dem Keramiksubstrat aufgebrachten Platindünnfilmwiderstand, einer dielektrischen Zwischenschicht, die beispielsweise aus Siliziumdioxid besteht, einer auf der Zwischenschicht angeordneten Barrierenschicht, die vorzugsweise aus Titandioxid besteht. Ferner ist dieser Schrift zu entnehmen, daß eine Schutzglasschicht über dem Platintemperatursensor angeordnet werden kann.

Die Aufgabe der vorliegenden Erfindung besteht darin, einen Platintemperatursensor zu schaffen, der auch bei Dauerbelastungen in einem hohen Temperaturbereich zuverlässige Meßergebnisse liefert, und ein Verfahren zur Herstellung eines solchen Sensors zu schaffen.

Diese Aufgabe wird durch einen Platintemperatursensor gemäß Anspruch 1 und ein Verfahren nach Anspruch 5 gelöst.

Die vorliegende Erfindung schafft einen Platintemperatursensor mit einem Keramiksubstrat und einem auf eine Hauptoberfläche des Keramiksubstrats aufgebrachten Platindünnfilmwiderstand. Eine Schutzzwischenschicht besteht aus einer zumindest im Bereich des Platindünnfilmwiderstands auf die Hauptoberfläche des Keramiksubstrats ganzflächig aufgedampften Keramikschicht und einer auf die aufgedampfte Keramikschicht aufgebrachten gesinterten Keramikpastenschicht. Auf die Schutzzwischenschicht ist eine Schutzglasur aufgebracht.

Die vorliegende Erfindung ermöglicht somit die vorteilhafte Verwendung einer Schutzglasur, um eine exzellente Abdichtung des Platindünnfilmwiderstands vor negativen Umwelteinflüssen zu erreichen, die jedoch nicht der elektrochemischen Zersetzung durch den Meßstrom ausgesetzt ist, wie es bei bekannten Platintemperatursensoren der Fall ist.

Erfindungsgemäß wird das genannte Problem der elektrochemischen Zersetzung der Schutzglasur dadurch umgangen, daß zwischen der auf dem Keramiksubstrat, das vorzugsweise ein Al₂O₃-Substrat ist, aufgebrachten Platinwiderstandsbahn und der Schutzglasur eine Doppelschicht eingefügt ist, die zum einen aus einer aufgedampften Keramikschicht, die ausreichend dünn ist, so daß in derselben auch bei höheren Temperaturen keine Risse entstehen, und zum anderen einer auf die aufgedampfte Keramikschicht aufgebrachten Keramikpastenschicht besteht. Diese Doppelschicht ist ausreichend dicht und elektrisch isolierend und besteht vorzugsweise ebenfalls aus Al₂O₃. Somit ist erfindungsgemäß die Schutzglasur von der stromführenden Platinwiderstandsbahn getrennt, indem unter einer Keramikpastenschicht, die Risse erhalten kann, wenn dieselbe hohen Temperaturen ausgesetzt ist, eine dünne aufgedampfte Keramikschicht vorgesehen ist, die keine Risse erleidet. Somit ist erfindungsgemäß gewährleistet, daß die Schutzglasur stets von dem Platindünnfilmwiderstand getrennt ist, selbst wenn die Schutzglasur in die Keramikpastenschicht eindringt, so daß eine elektrochemische Zersetzung der Glasur zuverlässig unterbunden ist. Diese Trennung von Platindünnfilmwiderstand und Schutzglasur kann nicht ausschließlich dadurch erreicht werden, daß eine dickere Keramikschicht aufgedampft wird, da diese dickere Keramikschicht ebenfalls Risse erleiden würde, wenn sie Dauerbelastungen bei hohen Temperaturen ausgesetzt ist.

Ein bevorzugtes Ausführungsbeispiel wird nachfolgend bezugnehmend auf die beiliegenden Zeichnungen näher erläutert. Es zeigen:
- Fig. 1:: eine schematische Querschnittansicht eines erfindungsgemäßen Platintemperatursensors; und
- Fig. 2:: eine schematische Querschnittansicht eines bekannten Platintemperatursensors.

Wie bei dem in Fig. 1 dargestellten Ausführungsbeispiel der Erfindung zu sehen ist, ist auf die strukturierte Platinschicht, die auf ein Keramiksubstrat 4 aufgebracht ist und einen Platindünnfilmwiderstand 2 sowie Anschlußflächen 8 definiert, eine Al₂O₃-Schicht 14 aufgedampft. Diese Schicht 14 wird derart aufgedampft, daß sie den Platindünnfilmwiderstand 2 vollständig überdeckt. Über der aufgedampften Schicht 14 ist eine weitere Schicht 16 angeordnet, die durch eine beispielsweise mittels Siebdruckverfahren aufgebrachte und angesinterte Keramikpaste gebildet ist. Diese Schicht 16 dient zur Verstärkung der vorher aufgedampften Al₂O₃-Schicht. Auf die Schicht 16 ist dann eine Glasur 18 aufgebracht, derart, daß der Platinfilmwiderstand 2 gasdicht gegen die Umwelt abgeschlossen ist.

Zur Herstellung des in Fig. 1 gezeigten erfindungsgemäßen Platintemperatursensors wird zunächst auf die Oberfläche des Keramiksubstrats 4, auf der die strukturierte Platinfilmschicht angeordnet ist, zumindest im Bereich des Platinfilmwiderstands 2 die Al₂O₃-Schicht 14 aufgedampft. Diese Schicht 14 wird nachfolgend unter Verwendung eines Siebdruckverfahrens durch eine Keramikpaste verstärkt. Die Keramikpaste wird nachfolgend vorzugsweise angesintert. Die Schichtdicke des aufgedampften Al₂O₃ liegt in einem Bereich von 1 bis 3 µm, vorzugsweise bei 1,5 µm. Die oben genannte Verstärkung der Zwischenschicht durch die Keramikpaste auf ca. 10 bis 30 µm ist vorgesehen, um auch bei hohen Temperaturen von über 800°C eine zuverlässige Abdichtung zu realisieren. Die Keramikpaste kann aus einem Gemenge von mehreren Keramikpulvern und Quarzmehl, beispielsweise Al₂O₃, MgO, SiO₂, bestehen.

Im Anschluß wird auf die Zwischenschicht, die bei dem bevorzugten Ausführungsbeispiel aus den zwei Teilschichten 14 und 16 besteht, eine 30 bis 200 µm dicke Glasurschicht aufgebracht. Dieses Aufbringen der Glasurschicht erfolgt vorzugsweise ebenfalls mittels eines Siebdruckverfahrens. Nachfolgend wird bei vorzugsweise etwa 1.100°C ein Brennprozeß durchgeführt, um eine gegen die äußere Atmosphäre gasdichte Schutzschicht für den Platindünnfilmwiderstand zu schaffen. Somit ergibt sich die in Fig. 1 in schematischem Querschnitt dargestellte Struktur.

## Patentansprüche

1. Platintemperatursensor mit folgenden Merkmalen:
einem Keramiksubstrat (4);
einem auf eine Hauptoberfläche des Keramiksubstrats (4) aufgebrachten Platindünnfilmwiderstand (2);
einer Schutzzwischenschicht (14, 16) ; und
einer auf die Schutzzwischenschicht (14; 16) aufgebrachten Schutzglasur (18),
**dadurch gekennzeichnet, daß** die Schutzzwischensicht (14, 16) aus einer zumindest im Bereich des Platindünnfilmwiderstands (2) auf die Hauptoberfläche des Keramiksubstrats (4) ganzflächig aufgedampften Keramikschicht (14) und einer auf die aufgedampfte Keramikschicht (14) aufgebrachten gesinterten Keramikpastenschicht (16) besteht.

2. Platintemperatursensor nach Anspruch 1, bei dem das Keramiksubstrat (4) aus Al₂O₃ besteht.

3. Platintemperatursensor gemäß Anspruch 1 oder 2, bei dem die aufgedampfte Keramikschicht (14) aus Al₂O₃ besteht.

4. Platintemperatursensor nach einem der Ansprüche 1 bis 3, bei dem die gesinterte Keramikpastenschicht (16) aus Al₂O₃ besteht.

5. Verfahren zum Herstellen eines Platintemperatursensors, mit folgenden Schritten:
a) Bereitstellen eines Keramiksubstrats (4) mit einem Platindünnfilmwiderstand (2) auf einer Hauptoberfläche desselben;
b) Aufdampfen einer Keramikschicht (14) auf die Hauptoberfläche des Keramiksubstrats (4) zumindest im Bereich des Platindünnfilmwiderstands (2);
c) Aufbringen einer Keramikpastenschicht (16) auf die aufgedampfte Keramikschicht (14); und
d) Aufbringen einer Glasur (18) auf die Keramikpastenschicht (16).

6. Verfahren nach Anspruch 5, bei dem im Schritt b) eine Al₂O₃-Schicht aufgedampft wird.

7. Verfahren nach Anspruch 5 oder 6, bei dem die Keramikpastenschicht (16) mittels eines Siebdrucks auf die aufgedampfte Al₂O₃-Schicht aufgebracht wird.

8. Verfahren nach einem der Ansprüche 5 bis 7, bei dem die Keramikpastenschicht (16) nach dem Aufbringen derselben zumindest angesintert wird.

9. Verfahren nach einem der Ansprüche 5 bis 8, bei dem im Schritt d) eine Glasurschicht (18) mittels Siebdruck aufgebracht und in einem Brennprozeß zu einer gasdichten Schutzschicht verschmolzen wird.

## Claims

1. A platinum temperature sensor comprising:
a ceramic substrate (4);
a platinum thin-film resistor (2) applied to a main surface of said ceramic substrate (4);
a protective intermediate layer (14, 16); and
a protective glaze applied to the protective intermediate layer (14, 16),
**characterized in that** the protective intermediate layer comprises a ceramic layer (14) which, at least in the area of the platinum thin-film resistor (2), is evaporated on the main surface of the ceramic substrate (4) over the full area thereof, and a sintered ceramic paste layer (16) which is applied to the evaporated ceramic layer (14).

2. A platinum temperature sensor according to claim 1, wherein the ceramic substrate (4) consists of Al₂O₃.

3. A platinum temperature sensor according to claim 1 or 2, wherein the evaporated ceramic layer (14) consists of Al₂O₃.

4. A platinum temperature sensor according to one of the claims 1 to 3, wherein the sintered ceramic paste layer (16) consists of Al₂O₃.

5. A method for producing a platinum temperature sensor comprising the following steps:
a) providing a ceramic substrate (4) including a platinum thin-film resistor (2) on a main surface thereof;
b) evaporating a ceramic layer (14) onto the main surface of the ceramic substrate (4) at least in the area of the platinum thin-film resistor (2);
c) applying a ceramic paste layer (16) to the evaporated ceramic layer (14); and
d) applying a glaze (18) to the ceramic paste layer (16).

6. A method according to claim 5, wherein an Al₂O₃ layer is evaporated in step b).

7. A method according to claim 5 or 6, wherein the ceramic paste layer (16) is applied to the evaporated Al₂O₃ layer by means of screen printing.

8. A method according to one of the claims 5 to 7, wherein the ceramic paste layer (16) is at least partially sintered after having been applied.

9. A method according to one of the claims 5 to 8, wherein step d) comprises the steps of applying a glaze coating (18) by means of screen printing and fusing it in a firing process so as to form a gas-tight protective layer.

## Revendications

1. Capteur de température à résistance en platine, présentant les caractéristiques suivantes :
un substrat en céramique (4);
une résistance en film mince en platine (2) appliquée sur une surface principale du substrat en céramique (4);
une couche intermédiaire protectrice (14, 16); et
un émaillage protecteur (18) appliqué sur la couche intermédiaire protectrice (14; 16),
**caractérisé en ce que** la couche intermédiaire protectrice (14, 16) est formée d'une couche en céramique (14) appliquée par déposition sous vide, sur toute la surface, sur la surface principale, au moins dans la zone de la résistance en film mince en platine (2), et d'une couche de pâte de céramique (16) soumise à un frittage, appliquée sur la couche en céramique (14) par déposition sous vide.

2. Capteur de température à résistance en platine selon la revendication 1, dans lequel le substrat en céramique (4) est formé d'Al₂O₃.

3. Capteur de température à résistance en platine selon la revendication 1 ou 2, dans lequel la couche en céramique (14) appliquée par déposition sous vide est formée en Al₂O₃.

4. Capteur de température à résistance en platine selon l'une des revendications 1 à 3, dans lequel la couche en pâte de céramique (16) frittée est en Al₂O₃.

5. Procédé de fabrication d'un capteur de température à résistance en platine, présentant les étapes suivantes :
a) préparation d'un substrat en céramique (4), avec une résistance en film mince en platine (2) sur une surface principale de celui-ci;
b) application par déposition sous vide d'une couche de céramique (14) sur la surface principale du substrat en céramique (4) au moins dans la zone de la résistance en film mince en platine (2);
c) application d'une couche en pâte de céramique (16) sur la couche de céramique (14) appliquée par déposition sous vide; et
d) application d'un émaillage (18) sur la couche de pâte de céramique (16).

6. Procédé selon la revendication 5, dans lequel on applique par déposition sous vide à l'étape b) une couche d' Al₂O₃.

7. Procédé selon la revendication 5 ou 6, dans lequel la couche de pâte de céramique (16) est appliquée par impression sérigraphique sur la couche d' Al₂O₃ appliquée par déposition sous vide.

8. Procédé selon l'une des revendications 5 à 7, dans lequel la couche de pâte de céramique (16) est au moins soumise à un frittage de liaison après application de celle-ci.

9. Procédé selon l'une des revendications 5 à 8, dans lequel, à l'étape d), une couche d'émail (18) est appliquée par impression sérigraphique et est mise en fusion dans un processus de cuisson, pour produire une couche protectrice étanche aux gaz.
